# EUROPÄISCHE PATENTSCHRIFT

(11) **EP 4 341 353 B1**
(45) Veröffentlichungstag und Bekanntmachung des Hinweises auf die Patenterteilung: **21.05.2025**
(21) Anmeldenummer: 22701929.6
(22) Anmeldetag: 20.01.2022
(51) Int. Cl.: C09D 7/45, C09D 17/00, C09B 67/46

(54) **UNIVERSELLE DISPERGIERMITTEL FÜR ANORGANISCHE UND ORGANISCHE PIGMENTE**
UNIVERSAL DISPERSING AGENT FOR INORGANIC AND ORGANIC PIGMENTS
DISPERSANT UNIVERSEL POUR PIGMENTS INORGANIQUES ET ORGANIQUES

(30) Priorität: 20.05.2021 EP 21174871
(43) Veröffentlichungstag der Anmeldung: 27.03.2024
(73) Patentinhaber: Clariant International Ltd, 4132 Muttenz (CH)
(72) Erfinder: HÄUSSLER, Matthias, 65239 Hocheim (DE); ABEN, Simon, 60329 Frankfurt am Main (DE); SCHNEIDER, Jan, 56414 Salz (DE); JÖRG, Rüger, 55246 Mainz-Kostheim (DE)
(74) Vertreter: Clariant Produkte (Deutschland) GmbH
(86) Internationale Anmeldenummer: PCT/EP2022/051180
(87) Internationale Veröffentlichungsnummer: WO 2022/242917

(56) Entgegenhaltungen:
- EP-A2- 1 092 756
- WO-A1-2009/145285
- WO-A1-2020/152093
- DE-A1- 102005 019 384
- DE-U1- 9 306 055

## Beschreibung

Die vorliegende Erfindung betrifft Zubereitungen oder Dispersionen von anorganischen und organischen Pigmenten auf Wasserbasis, Verfahren zu ihrer Herstellung und ihre Verwendung zum Färben von natürlichen und synthetischen Materialien aller Art, insbesondere Beschichtungsmaterialien, Farben, Lacken, Glasuren, Holzschutzsystemen und Tinten.

Anorganische Pigmente bestehen hauptsächlich aus Mineralien oder Metallsalzen wie Chromaten, Metalloxiden, Sulfaten, Sulfiden, Carbonaten und Cyaniden. Sie sind aufgrund ihrer Lichtechtheit und geringen Kosten in der Industrie weit verbreitet. Organische Pigmente hingegen bestehen üblicherweise aus Kohlenstoffringen und -ketten, zeigen eine hellere, sattere Farbe und eine höhere Farbstärke. Beide Pigmenttypen sind feste Partikel, weisen jedoch aufgrund ihrer unterschiedlichen Natur unterschiedliche Oberflächenchemien auf. Um Pigmente in den oben beschriebenen Formulierungen zu verwenden, müssen spezifische oberflächenaktive Substanzen wie Benetzungs- und Dispergierhilfsmittel verwendet werden, um die Oberflächenchemie zu verändern und eine gute Dispersion der Pigmentteilchen zu ermöglichen. Gemäß den bekannten Partikelstabilisierungsmechanismen ermöglichen die verwendeten Benetzungs- und Dispergierhilfsmittel eine gute sterische und / oder elektrostatische Stabilisierung der dispergierten Partikel in diesen Applikationsmedien ohne Flockung oder Reagglomeration der Pigmentpartikel.

Es besteht der Bedarf nach Bereitstellung von wässrigen Pigmentpräparaten für die oben genannten Anwendungen, die die hohen technischen Anforderungen insbesondere hinsichtlich Partikelgrößenverteilung, Verträglichkeit und Mischbarkeit mit dem jeweiligen Auftragsmedium, koloristischen Eigenschaften, Pigmentgehalt, Rheologieprofil, Stabilität erfüllen.

Die Tendenz zum Schäumen, die auch die regulatorischen Anforderungen erfüllt, beispielsweise im Hinblick auf das toxikologische und ökotoxikologische Profil, ist eine zunehmende Herausforderung für die Industrie.

Der Grund dafür ist insbesondere, dass die fortschreitende Verschärfung der Gesetzgebung zum Chemikalienrecht und die Vergabe von Umweltzeichen, beispielsweise des Blauen Engels oder des Europäischen Umweltzeichens, dazu führen, dass immer mehr gängige Formulierungskomponenten für Pigmentpräparate nicht mehr verwendet werden können, oder nur in begrenztem Umfang für einige Anwendungsbereiche verwendet werden können. Dies gilt insbesondere für die Netz- und Dispergiermittel. Zum Beispiel sind Alkylphenolethoxylate (APEOs) auf bioakkumulative und hormonelle Abbauprodukte zurückzuführen, die heute für viele Anwendungen streng reguliert und verboten sind. Die Verwendung von Tristyrylphenolethoxylaten (TSPEOs) ist weiterhin möglich, in der Industrie besteht jedoch aufgrund des nachteiligen ökotoxikologischen Profils ein starker Trend, auf TSPEOs zu verzichten. Die Verwendung von in der Vergangenheit verwendeten Dispergiermitteln auf Novolak- oder Bisphenol A-Basis ist aus den gleichen Gründen begrenzt. Die Verwendung von oxyalkylierten Reaktionsprodukten auf Basis von primären und sekundären Aminen als Dispergiermittel ist aus regulatorischen und technischen Gründen für einige Anwendungen ebenfalls kritisch und daher nur in begrenztem Umfang möglich.

Im Stand der Technik werden wässrige Pigmentzubereitungen beschrieben, die verschiedenen Dispergierhilfsmittel enthalten, für die eine universelle Wirkung für organische oder anorganische Pigmente behauptet wird.

US-5340394 beschreibt Pigmentkonzentrate auf der Basis von Polyethylenglykolpolyethern mit niedrigen Molekulargewichten von 200 bis 700 in Verbindung mit nichtionischen Alkylglycosid-Tensiden.

WO-2020/152093 lehrt wässrige Pigmentpräparationen, enthaltend (A) mindestens ein organisches und/oder anorganisches Pigment und/oder Füllstoff (B) mindestens ein Dispergiermittel der Formel (I) oder (II), oder Mischungen der Dispergiermittel der Formeln (I) und (II), 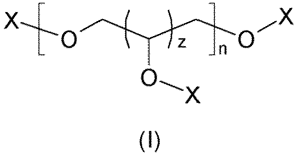 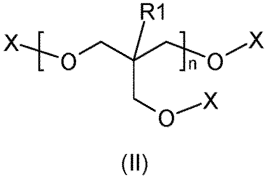 wobei n eine ganze Zahl größer oder gleich 1, bevorzugt 1 bis 5, besonders bevorzugt 1 bis 2, z eine ganze Zahl größer oder gleich 1, bevorzugt 1 bis 10, besonders bevorzugt 1 bis 4, R1 ein aliphatischer, linearer oder verzweigter Kohlenwasserstoffrest mit 1 bis 10 Kohlenstoffatomen oder ein Wasserstoffatom oder die Struktureinheit -O-X oder die Struktureinheit -CH₂-O-X ist, und Struktureinheit X der Formel (III) entspricht.

DE-10 2005 019 384 lehrt ein Polymer der Formel (I), 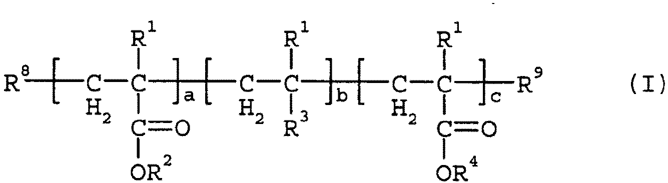 wobei bedeutet: R1: jeweils unabhängig voneinander H, oder eine Alkylgruppe mit 1 bis 6 Kohlenstoffatomen; R2: H, eine Alkylgruppe mit 1 bis 8 Kohlenstoffatomen, ein Alkaliion, ein Erdalkaliion, ein Ammoniumion oder der Rest einer beliebigen anderen Base; R3: eine Arylgruppe oder eine Aralkylgruppe mit 6 bis 18 Kohlenstoffatomen; R4, R5: H oder eine Alkylgruppe mit 1 bis 6 Kohlenstoffatomen; R6, R7: jeweils unabhängig: H oder Methyl; R8, R9: H oder eine beliebige endständige Gruppe; a: 0,1 bis 0,9; b: 0,9 bis 0,1; c: 0,001 bis 0,5; m: 1 bis 4; n: 1 bis 150. Das erfindungsgemäße Polymer eignet sich insbesondere als Dispergiermittel für Pigmente oder Füllstoffe in Lacken.

DE-930655U1 lehrt eine wässerige nicht-verstopfende Abtönfarbe für Anstrichfarben oder ähnliche Beschichtungszusammensetzungen, welche Abtönfarbe bei 20°C eine Viskosität von 0,05 bis 1,5 Ns/m² (d. h. 0,5 bis 15 Poise und vorzugsweise 1 bis 12 Poise) aufweist und feste Pigmentteilchen enthält, die in einem Dispergiermittelsystem dispergiert sind, das aus einem Gemisch aus Wasser und einem wassermischbaren nicht-flüchtigen micellisierenden Dispergiermittel besteht, welches hydrophile Gruppierungen und solche Gruppierungen (die üblicherweise weniger hydrophil sind als die hydrophoben Gruppierungen) aufweist, die zu einer Adsorption auf die Oberfläche des Pigments fähig sind, wobei
a) das Dispergiermittelsystem auch eine kleinere Menge (von weniger als 50 Gew.-% und vorzugsweise weniger als 30 Gew.-%, bezogen auf das Gewicht des Dispergiermittelsystems) eines nicht-flüchtigen macromolekularen nicht-micellisierenden Hilfsmaterials mit einem gewichtsmäßigen Durchschnittsmolekulargewicht von 230 (vorzugsweise 250) bis 4500 enthält, das ausgewählt ist aus
   i) Flüssigkeiten, die mit dem Gemisch aus Wasser und dem nicht-flüchtigen Dispergiermittel mischbar sind, und/oder
   ii) teilchenförmigen organischen Feststoffen mit einem Schmelzpunkt unterhalb 150°C, die in dem System löslich oder dispergierbar sind,
b) für ein ausgewähltes Gewicht des Pigments, das Gewichtsverhältnis des nicht-flüchtigen micellisierenden Dispergiermittels zum Pigment mindestens 5 % (und vorzugsweise 15 %) größer ist als das Gewichtsverhältnis des nicht-flüchtigen micellisierenden Dispergiermittels zum Pigment, das beim Daniel-Fließpunkt einer Bezugs-Abtönfarbe vorliegen würde, die nur aus dem gleichen Pigment, dem Wasser und dem gleichen nicht-flüchtigen micellisierenden Dispergiermittel besteht,
c) die Fließfähigkeit der Abtönfarbe derart ist, dass, nachdem die nicht-verstopfende Abtönfarbe bei 25°C während 18 h in einer zylindrischen Bohrung mit einem Durchmesser von 2 mm und einer Länge von 15 mm bei einer umgebenden relativen Feuchte von 50 % aufbewahrt worden ist, ein Druck von nicht mehr als 320 MN/m² ausreicht, die restliche Abtönfarbe aus der Bohrung ausfließen zu lassen, und
d) "nicht-flüchtig" für einen Dampfdruck unterhalb 1,3 N/m² (und vorzugsweise unterhalb 1,0 N/m²) bei 25°C steht.

EP-1092756 lehrt eine Pigmentpräparation, enthaltend ein Pigment und/oder Ruß und ein Polymer und/oder ein Tensid aus der Reihe vernetzte Polyoxyethylenacrylsäure, Fettalkoholpolyglykolether, Polyvinylpyrrolidone, Alkoholalkoxylate, Ligninsulfonate, Alkylphenolpolyglykolether, Naphthalinsulfonsäurederivate oder Mischungen hiervon, welche durch Gefriertrocknung aus wässriger Dispersion hergestellt wird. Sie können zur Einfärbung und/oder Antistatischausrüstung in wasserbasierenden Farben- und Lacksystemen, Dispersionsfarben, Druckfarben, Tintensystemen und Beschichtungssystemen verwendet werden.

WO-2009/145285 lehrt eine Aufzeichnungstinte, umfassend eine Farbmitteldispersion umfassend:
ein farbgebendes Mittel und
Wasser,
wobei das Dispergiermittel ein Polycarbonsäure-Dispergiermittel enthaltend durch die Formeln (1) bis (3) dargestellte Einheiten ist: 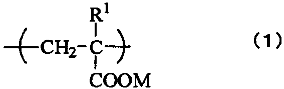 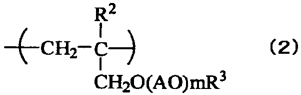 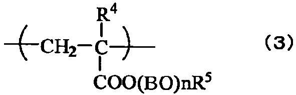
worin R¹, R² und R⁴ ausgewählt sind aus einem Wasserstoffatom und CH₃; R³ ausgewählt ist aus einem Wasserstoffatom und einer C1-C3-Alkylgruppe; R⁵ eine C1-C3-Alkylgruppe darstellt; AO und BO eine C2-C3-Oxyalkylengruppe darstellen; M ausgewählt ist aus Alkalimetall, Erdalkalimetall, Ammonium und organischem Amin; m eine ganze Zahl von 1 bis 30 ist; und n eine ganze Zahl von 5 bis 50 ist, und wobei das farbgebende Mittel irgendeines von einem schwarzen Pigment, einem Magenta-Pigment, einem Cyan-Pigment und einem gelben Pigment ist.

US-7659340 lehrt Pigmentpasten unter Verwendung einer Tensidmischung, die mindestens ein Alkyd-kompatibles Tensid und mindestens ein Latex-kompatibles Tensid umfasst.

WO-2014/000842 beschreibt wässrige Pigmentzubereitungen, welche Fettsäurekondensationsprodukte und nichtionische Tenside als Dispergierhilfsmittel enthalten.

US-2018/244925 lehrt Pigmentformulierungen, welche wasserlösliche, nichtionische, oberflächenaktive Copolymere auf der Basis von Carbonsäureestern und / oder Carbonsäureamiden und einem Phosphor- oder Phosphorsäuretensid als Dispergierhilfsmittel enthalten.

Aus dem Stand der Technik geht hervor, dass universelle Dispergiereigenschaften nur erreicht werden können, wenn wasserlösliche Tenside als eine Komponente der Pigmentformulierung verwendet werden. Solche wasserlöslichen Tenside haben jedoch ein niedriges Molekulargewicht, können leicht an die Oberfläche von Beschichtungen wandern und neigen daher häufig zur Auswaschung von Tensiden, wenn sie in wässrigen Beschichtungszusammensetzungen wie Farben auf Wasserbasis verwendet werden. Eine solche Auswaschung ist auf der Oberfläche von trocknenden oder getrockneten Farben als vertikale Markierungen (allgemein als "Schneckenspuren" bekannt) unter kalter und feuchter Atmosphäre sichtbar. Andererseits wurde durch Gabel in European Coatings Journal 02-2019, S. 90-94 gezeigt, dass polymere Dispergiermittel aufgrund ihres höheren Molekulargewichts und ihrer chemischen Struktur weniger zum Auslaugen neigen.

Dies wird durch ihre üblichen Mehrfachadhäsionspunkte an der Pigmentoberfläche und ihre geringere Beweglichkeit innerhalb der Farb- und Lackformulierung aufgrund einer langsameren Brownschen Molekularbewegung und Verknäulung der Polymerketten mit anderen Farb- und Lackbestandteilen verursacht.

Es wird sehr deutlich, dass trotz des beschriebenen Standes der Technik immer noch ein Bedarf an universellen Dispergierhilfsmitteln für Pigmentformulierungen mit verbesserter Leistung besteht. Die Pigmentformulierungen sollten die höchstmögliche Farbstärke aufweisen. Darüber hinaus sollten sie auch bei längerer Lagerung stabil bleiben und nicht thixotrop sein.

Es wurde nun überraschenderweise gefunden, dass eine Kombination von zwei polymeren Dispergiermitteln stabile, universelle Formulierungen von anorganischen und/oder organischen Pigmenten erzielen kann, die die gewünschten Eigenschaften bei den oben erwähnten Färbeanwendungen zeigen, insbesondere leichte Dispergierbarkeit und hohe Farbstärke bei niedrigen Formulierungsviskositäten. Desweiteren wurde überraschenderweise gefunden, dass die Kombination aus zwei polymeren Dispergiermitteln synergistische Effekte in Pigmentpräparationen zeigen, die von den Einzelkomponenten nicht erhalten werden.

Als ersten Gegenstand betrifft die vorliegende Erfindung eine Pigmentzubereitung, enthaltend
(A) mindestens ein organisches und / oder anorganisches Pigment und / oder Füllstoff;
(B) mindestens ein anionisches Copolymer als Dispergiermittel, welches
   (I) 40 bis 95 mol-% Struktureinheiten eines anionischen Monomers enthält, welches ausgewählt ist aus der Gruppe bestehend aus Acrylsäure, Methacrylsäure, Itaconsäure, 2-Carboxyethylacrylsäure, Maleinsäure, deren Gemische und ihren jeweiligen Salzen, vorzugsweise Methacrylsäure oder ihr Salz, und
   (II) 5 bis 60 mol-% Struktureinheiten eines Monomers mit Wiederholungseinheiten gemäß Formel (B1) 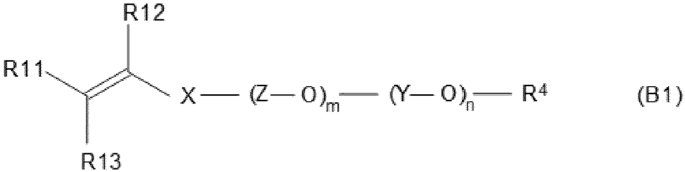 worin

   - R11, R12, R13: unabhängig voneinander ausgewählt sind aus der Gruppe bestehend aus H, Methyl, Ethyl,
   - R4: H oder eine Alkylgruppe mit 1 bis 4 Kohlenstoffatomen,
   - X: ausgewählt ist aus der Gruppe bestehend aus O, COO, CONH, CH₂O oder CH₂CH₂O,
   - Y: eine Ethylengruppe
   - Z: eine Propylengruppe, eine Butylengruppe oder eine Phenylethylengruppe,
   - m: eine ganze Zahl von 0 bis 100,
   - n: eine ganze Zahl von 1 bis 100, und
   - m + n: größer als 5 ist, und
(C) mindestens ein nichtionisches Copolymer, welches mindestens eine Struktureinheit mit aromatischen Gruppen und mindestens eine Struktureinheit mit Polyethylenglykolgruppen enthält, und
(H) Wasser.

Die erfindungsgemäße Pigmentzubereitung kann gegebenenfalls auch folgende weitere Bestandteile enthalten:
(D) Netzmittel,
(E) weitere Tenside und / oder Dispergiermittel,
(F) ein oder mehrere organische Lösungsmittel und / oder eine oder mehrere hydrotrope Substanzen und / oder Gemische davon, und
(G) weitere zur Herstellung wässriger Pigmentdispersionen übliche Additive.

Bevorzugte Pigmentzubereitungen enthalten 5 bis 80 Gew.-%, vorzugsweise 10 bis 70 Gew.-%, insbesondere bevorzugt 30 bis 70 Gew.-% der Komponente (A).

Bevorzugte Pigmentzubereitungen enthalten 0,1 bis 30 Gew.-%, vorzugsweise 1 bis 20 Gew.-%, insbesondere bevorzugt 2 bis 15 Gew.-% der Komponente (B).

Bevorzugte Pigmentzubereitungen enthalten 0,1 bis 30 Gew.-%, vorzugsweise 1 bis 20 Gew.-%, insbesondere bevorzugt 2 bis 15 Gew.-% der Komponente (C).

Bevorzugte Pigmentzubereitungen enthalten Wasser ad 100 Gew.-%.

Besonders bevorzugte Pigmentpräparate enthalten Bestandteile in folgenden Anteilen:
(A) 5 bis 80 Gew.-%, insbesondere 10 bis 70 Gew.-%,
(B) 0,1 bis 30 Gew.-%, insbesondere 1 bis 20 Gew.-%,
(C) 0,1 bis 30 Gew.-%, insbesondere 1 bis 20 Gew.-%,
(D) 0 bis 10 Gew.-%, insbesondere 0,1 bis 5 Gew.-%,
(E) 0 bis 20 Gew.-%, insbesondere 1 bis 10 Gew.-%,
(F) 0 bis 30 Gew.-%, insbesondere 5 bis 20 Gew.-%,
(G) 0 bis 20 Gew.-%, insbesondere 0,1 bis 5 Gew.-%,
jeweils bezogen auf das Gesamtgewicht (100 Gew.-%) der Pigmentzubereitung.

Für den Fall, dass die erfindungsgemäße Pigmentzubereitung eine oder mehrere der Komponenten (D), (E), (F) und (G) enthält, ist ihre Mindestkonzentration unabhängig voneinander, vorzugsweise mindestens 0,01 Gew.-%, insbesondere mindestens 0,1%, bezogen auf das Gesamtgewicht der Pigmentzubereitung.

### Komponente (A)

Komponente (A) der erfindungsgemäßen Pigmentzubereitung ist ein feinteiliges organisches oder anorganisches Pigment oder ein Füllstoff oder eine Mischung verschiedener organischer und / oder anorganischer Pigmente und / oder Füllstoffe. Komponente (A) kann auch ein Farbstoff sein, der in bestimmten Lösungsmitteln löslich und in anderen Lösungsmitteln pigmentiert ist. Die Pigmente können sowohl in Form von trockenem Pulver als auch als wasserfeuchter Presskuchen verwendet werden.

Die verwendeten organischen Pigmente sind vorzugsweise
Monoazo, Disazo, lackiertes Azo, β-Naphthol, Naphthol AS, Benzimidazolon, Disazokondensation, Azometallkomplexpigmente und polycyclische Pigmente wie Phthalocyanin, Chinacridon, Perylen, Perinon, Thioindigo, Anthanthron, Anthronon, Anthrachinon, Isoviolanthron, Pyranthron, Dioxazin, Chinophthalon, Isoindolinon, Isoindolin und Diketopyrrolopyrrolpigmente oder Ruße; Rußpigmente, wie z. B. Gas- oder Ofenschwärze;
Monoazo- und Disazo-Pigmente, insbesondere die Farbindexpigmente Pigment Gelb 1, Pigment Gelb 3, Pigment Gelb 12, Pigment Gelb 13, Pigment Gelb 14, Pigment Gelb 16, Pigment Gelb 17, Pigment Gelb 73, Pigment Gelb 74, Pigment Gelb 81, Pigment Gelb 83, Pigment Gelb 87, Pigment Gelb 97, Pigment Gelb 111, Pigment Gelb 126, Pigment Gelb 127, Pigment Gelb 128, Pigment Gelb 155, Pigment Gelb 174, Pigment Gelb 176, Pigment Gelb 191, Pigment Gelb 213, Pigment Gelb 214, Pigment Gelb 219, Pigment Rot 38, Pigment Rot 144, Pigment Rot 214, Pigment Rot 242, Pigment Rot 262, Pigment Rot 266, Pigment Rot 269, Pigment Rot 274, Pigment Orange 13, Pigment Orange 34 oder Pigment Brau 41; β-Naphthol- und Naphthol AS-Pigmente, insbesondere die Farbindexpigmente Pigment Rot 2, Pigment Rot 3, Pigment Rot 4, Pigment Rot 5, Pigment Rot 9, Pigment Rot 12, Pigment Rot 14, Pigment Rot 53: 1, Pigment Rot 112, Pigment Rot 146, Pigment Rot 147, Pigment Rot 170, Pigment Rot 184, Pigment Rot 187, Pigment Rot 188, Pigment Rot 210, Pigment Rot 247, Pigment Rot 253, Pigment Rot 256, Pigment Orange 5, Pigment Orange 38 oder Pigment Brau 1; lackierte Azo- und Metallkomplexpigmente, insbesondere die Farbindexpigmente Pigment Rot 48: 2, Pigment Rot 48: 3, Pigment Rot 48: 4, Pigment Rot 57: 1, Pigment Rot 257, Pigment Orange 68 oder Pigment Orange 70; Benzimidazolinpigmente, insbesondere die Farbindexpigmente Pigmentgelb 120, Pigmentgelb 151, Pigmentgelb 154, Pigmentgelb 175, Pigmentgelb 180, Pigmentgelb 181, Pigmentgelb 194, Pigmentrot 175, Pigmentrot 176, Pigmentrot 185, Pigmentrot 208 Pigment Violett 32 Pigment Orange 36, Pigment Orange 62, Pigment Orange 72 oder Pigment Brau 25; Isoindolinon- und Isoindolinpigmente, insbesondere die Farbindexpigmente Pigment Gelb 139 oder Pigment Gelb 173; Phthalocyaninpigmente, insbesondere die Farbindexpigmente Pigment Blau 15, Pigment Blau 15: 1, Pigment Blau 15: 2, Pigment Blau 15: 3, Pigment Blau 15: 4, Pigment Blau 15: 6, Pigment Blau 16, Pigment Grün 7 oder Pigment Grün 36; Anthanthron-, Anthrachinon-, Chinacridon-, Dioxazin-, Indanthron-, Perylen-, Perinon- und Thioindigopigmente, insbesondere die Farbindexpigmente Pigment Gelb 196, Pigmentrot 122, Pigmentrot 149, Pigmentrot 168, Pigmentrot 177, Pigmentrot 179, Pigmentrot 181, Pigmentrot 207, Pigmentrot 209, Pigmentrot 263, Pigmentblau 60, Pigment Violett 19, Pigment Violett 23 oder Pigmentorange 43; Triarylcarboniumpigmente, insbesondere die Farbindexpigmente Pigment Rot 169, Pigment Blau 56 oder Pigment Blau 61; Diketopyrrolopyrrolpigmente, insbesondere die Farbindexpigmente Pigment Rot 254, Pigment Rot 255, Pigment Rot 264, Pigment Rot 270, Pigment Rot 272, Pigment Orange 71, Pigment Orange 73, Pigment Orange 81.

Geeignet sind auch lackierte Farbstoffe wie Ca-, Mg- und Al-Lackpigmente von Farbstoffen, die Sulfonsäure- und / oder Carbonsäuregruppen enthalten.

Geeignete anorganische Pigmente sind beispielsweise Titandioxide, Zinksulfide, Zinkoxide, Eisenoxide, Magnetite, Manganeisenoxide, Chromoxide, Ultramarin, Nickel- oder Chromantimontitanoxide, Mangantitanrutil, Kobaltoxide, Mischoxide von Kobalt und Aluminium, Rutil-Mischphasenpigmente, Sulfide von Seltenen Erden, Spinelle aus Zink und Kobalt mit Nickel, Spinelle auf Eisen- und Chrombasis mit Kupferzink sowie Mangan, Wismutvanadate und Mischpigmente. Insbesondere die Farbindexpigmente Pigment Gelb 184, Pigment Gelb 53, Pigment Gelb 42, Pigment Gelb Braun 24, Pigment Rot 101, Pigment Blau 28, Pigment Blau 36, Pigment Grün 50, Pigment Grün 17, Pigment Schwarz 11, Pigment Schwarz 33 und Pigment Weiß 6 werden verwendet. Oft werden auch bevorzugt Mischungen anorganischer Pigmente verwendet. Üblicherweise werden auch Gemische von organischen mit anorganischen Pigmenten verwendet.

Geeignete Füllstoffe sind beispielsweise fein verteilte Erze, Mineralien und schwer oder unlösliche Salze wie Carbonate, Calciumcarbonat, Dolomit, Siliziumdioxid, Quarz, Cristobalit, Kieselgur, Silikate, Aluminiumsilikate, Kieselsäuren, Talk, Kaolin, Glimmer, Feldspat und Bariumsulfat. Vorzugsweise werden auch häufig Füllstoffmischungen verwendet. Häufig werden auch Gemische von organischen und/oder anorganischen Pigmenten mit Füllstoffen verwendet. Formulierungen, die nur einen oder mehrere Füllstoffe enthalten, werden beispielsweise zum Mischen von Pigmentpräparaten zum Einstellen des gewünschten Eigenschaftsprofils wie Pigmentgehalt, Rheologie, Dichte oder Verträglichkeit verwendet.

### Komponente (B)

(B) ist ein anionisches Copolymer, das mindestens die Struktureinheiten (I) und (II) enthält.

Die Struktureinheit (I) von (B) ist in einer bevorzugten Ausführungsform Acrylsäure oder Methacrylsäure, oder deren Salze, besonders bevorzugt Methacrylsäure oder deren Salze.

Im Allgemeinen beträgt der Anteil der Struktureinheiten (I) von 40 bis 95 mol-%, vorzugsweise von 45 bis 85 mol-%.

Salze der Struktureinheit (I) von (B) sind in einer bevorzugten Ausführungsform Alkalisalze, insbesondere Natrium- oder Kaliumsalze, sowie Ammoniumsalze.

Die Struktureinheit (II) von (B) entspricht der Formel (B1). Im Allgemeinen beträgt der Anteil der Struktureinheiten (II) von 5 bis 60 mol-%, vorzugsweise von 15 bis 55 mol-%.

In Formel (B1) sind R11, R12, R13 vorzugsweise unabhängig voneinander ausgewählt aus der Gruppe bestehend aus H oder Methyl. Insbesondere bevorzugt steht R12 für Methyl. Insbesondere bevorzugt stehen R11 und R13 für H.

In Formel (B1) steht R4 vorzugsweise für H oder eine Methylgruppe. Insbesondere bevorzugt steht R4 für H.

In Formel (B1) steht X vorzugsweise für O oder C(O)O. Besonders bevorzugt stehen X für C(O)O und R12 für Methyl.

In Formel (B1) steht Z vorzugsweise für Propylen und Phenylethylen. Mit einer Phenylethylengruppe entspricht die Struktureinheit (Z-O) der Formel (2)

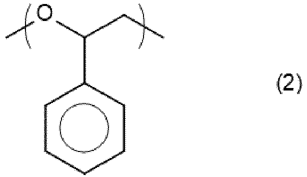

In Formel (B1) steht m für eine ganze Zahl von 0 bis 100, vorzugsweise für eine ganze Zahl von 1 bis 10, besonders bevorzugt von 2 bis 5, wie beispielsweise 3 oder 4.

In Formel (B1) steht n für eine ganze Zahl von 1 bis 100, vorzugsweise für eine ganze Zahl von 5 bis 45. Insbesondere bevorzugt steht n für eine ganze Zahl von 8 bis 14.

In Formel (B1) steht (m+n) vorzugsweise für eine ganze Zahl von 8 bis 49. Insbesondere bevorzugt steht (m+n) für eine ganze Zahl von 11 bis 18.

### Komponente (C)

Komponente (C) ist (C) ein nichtionisches Copolymer, das mindestens eine Struktureinheit mit aromatischen Gruppen und mindestens eine Struktureinheit mit Polyoxyethylengruppen enthält. Komponente (C) hat die Wirkung eines Dispergiermittels für anorganische oder organische Pigmente.

In einer bevorzugten Ausführungsform umfasst das Copolymer (C) neben mindestens einer Struktureinheit mit Polyoxyethylengruppen eine Struktureinheit mit aromatischen Gruppen, welche sich von Styroloxid ableiten.

Besonders bevorzugt sind Copolymere (C), wie sie in WO-2020/152093 beschrieben sind. In dieser besonders bevorzugten Ausführungsform entsprechen die Copolymere (C) der Formel (3), der Formel (4), oder deren Mischungen 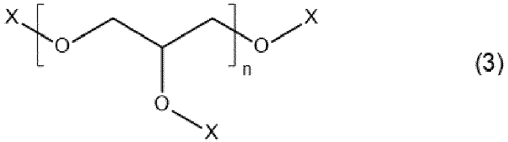 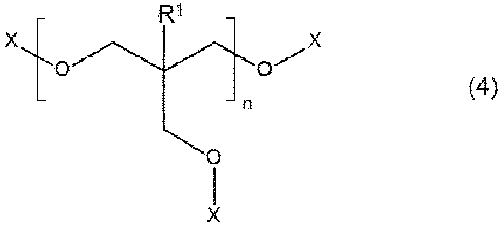 wobei
- n: eine ganze Zahl größer oder gleich 1, vorzugsweise gleich 1
- R¹: ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist, vorzugsweise ein Wasserstoffatom,
- X: der Formel (5) entspricht 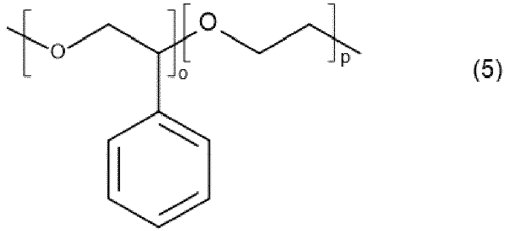 worin
o eine ganze Zahl von 1 bis 50, vorzugsweise eine ganze Zahl von 1 bis 4
p eine ganze Zahl von 1 bis 200, vorzugsweise eine ganze Zahl von 10 bis 25 und
(o+p) größer als 2 ist, vorzugsweise eine ganze Zahl von 2 bis 250.

Insbesondere bevorzugt is (o+p) eine ganze Zahl von 11 bis 29.

Besonders bevorzugt sind Copolymere (C) von Styrol und Maleinsäureanhydrid, die mit Polyetheraminen modifiziert werden, wie sie in DE-102007032185 beschrieben sind. In dieser besonders bevorzugten Ausführungsform entsprechen die Copolymere (C) der Formel (6) 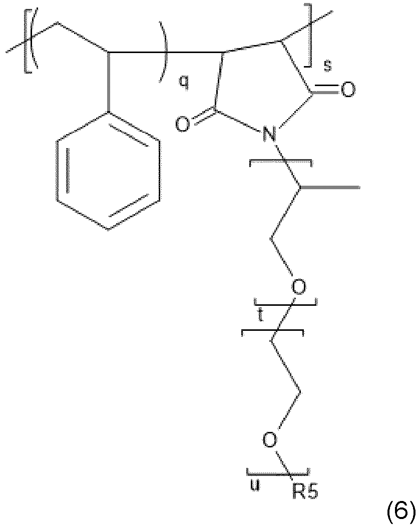 worin
- q: eine ganze Zahl von 1 bis 4, besonders bevorzugt eine ganze Zahl von 1 bis 2
- s: eine ganze Zahl von 5 bis 50, besonders bevorzugt eine ganze Zahl von 5 bis 20,
- R5: H oder einer Alkylgruppe mit 1 bis 4 Kohlenstoffatomen, besonders bevorzugt Methyl,
- t: eine ganze Zahl von 0 bis 10, besonders bevorzugt eine ganze Zahl von 1 bis 4,
- u: eine ganze Zahl von 1 bis 100, besonders bevorzugt eine ganze Zahl von 10 bis 50, und
- t + u: größer als 10 ist.

Aufgrund ihrer nichtionischen Eigenschaften können Copolymere des Typs (C) fast ausschließlich für organische Pigmentformulierungen verwendet werden und funktionieren häufig bei anorganischen Pigmenten nicht.

### Komponente (D)

Als Komponente (D) werden beispielsweise kationische, anionische, amphotere oder nicht-ionogene Verbindungen verwendet, die die Pigmentbenetzung (Netzmittel) fördern. Dabei handelt es sich vorzugsweise um sogenannte Substratnetz- oder Verlaufshilfsmittel auf Basis von Fluortensiden, modifizierten Fluor-Acrylaten oder organisch-modifizierten Silikonen.

### Komponente (E)

Als Komponente (E) der erfindungsgemäßen Pigmentzubereitungen verwendet man übliche Dispergiermittel und Tenside oder Gemische solcher Substanzen, die zur Herstellung von wässrigen Pigmentdispersionen geeignet sind. Üblicherweise werden hierfür anionische, kationische, amphotere oder nichtionische Tenside verwendet. Es hat sich als besonders erfolgreich erwiesen, dass Dispergiermittel eine oder mehrere mittel- oder langkettige oder einige Kohlenwasserstoffketten mit aromatischen Ringgruppen aufweisen. Beispiele hierfür sind Alkylsulfate wie z. B. Laurylsulfat, Stearylsulfat oder Octadecylsulfat, primäre Alkylsulfonate wie z. B. Dodecylsulfonat und sekundäre Alkylsulfonate, insbesondere das C₁₃-C₁₇-Alkansulfonat-Natriumsalz, Alkylphosphate, Alkylbenzolsulfonate wie Dodecylbenzolsulfonsäure sowie alle Salze dieser Verbindungen. Weiter geeignet als Komponente (E) der erfindungsgemäßen Pigmentzubereitungen sind Sojalecithin und Kondensationsprodukte von Fettsäuren und Taurin oder Hydroxyethansulfonsäure, ebenso wie Alkoxylierungsprodukte von Rizinusölharzestern, Fettalkoholen, Fettaminen, Fettsäuren und Fettsäureamiden.

Diese Alkoxylierungsprodukte können auch ionisch sein und als Endgruppen, beispielsweise Sulfobernsteinsäure-Halbester, Sulfonsäure-, Schwefelsäure- und Phosphorsäureester und deren Salze, Sulfonate, Sulfate oder Phosphate umfassen. Geeignet sind auch nichtionische Copolymere, die mit Hilfe von Makromonomeren aus Polyethylenglykolmono(meth)acrylsäureestern oder Polypropylenglykolmono(meth)acrylsäureestern hergestellt werden, und in ähnlicher Weise auch anionisch modifizierte Blockcopolymere bestehend aus Styroloxid und Polyalkylenoxideinheiten.

### Komponente (F)

Komponente (F) entspricht organischen Lösungsmitteln, Hydrotropen oder Retentionsmitteln, die als Lösungsvermittler fungieren oder die Eintrockenbeständigkeit erhöhen. Dies können beispielsweise die folgenden Verbindungen oder eine Mischung davon sein: einwertige oder mehrwertige Alkohole, ihre Ether und Ester, beispielsweise Alkanole, insbesondere mit 1 bis 4 Kohlenstoffatomen, wie beispielsweise Methanol, Ethanol, Propanol, Isopropanol, Butanol, Isobutanol; zwei- oder dreiwertige Alkohole, insbesondere mit 2 bis 5 Kohlenstoffatomen, z. Ethylenglykol, Propylenglykol, 1,3-Propandiol, 1,4-Butandiol, 1,5-Pentandiol, 1,6-Hexandiol, 1,6,6-Hexantriol, Glycerin, Diethylenglykol, Dipropylenglykol, Triethylenglykol, Polyethylenglykol, Tripropylenglykol, Polypropylenglykol; Niederalkylether von mehrwertigen Alkoholen, wie beispielsweise Ethylenglykolmonomethyl, Ethyl- oder Butylether, Triethylenglykolmonomethyl oder Ethylether; Ketone und Ketonalkohole wie Aceton, Methylethylketon, Diethylketon, Methylisobutylketon, Methylpentylketon, Cyclopentanon, Cyclohexanon, Diacetonalkohol; Copolymere von Ethylen und Propylenglykol.

### Komponente (G)

Komponente (G) umfasst eine Reihe an verschiedenen Additiven wie zum Beispiel Rheologie-modifizierende Additive oder Anti-Absetzmittel, die sich günstig auf die Viskosität und Rheologie auswirken. Als Mittel zur Regulierung der Viskosität können Verbindungen wie Polyvinylalkohol und Cellulosederivate eingesetzt werden. Wasserlösliche natürliche oder künstliche Harze und Polymere als Filmbildner oder Bindemittel zur Erhöhung der Adhäsions- und Abriebfestigkeit können ebenfalls in Betracht gezogen werden. Organische oder anorganische Basen und Säuren werden als pH-Regler verwendet. Bevorzugte organische Basen sind Amine, z. B. Ethanolamin, Diethanolamin, Triethanolamin, N,N-Dimethylethanolamin, Diisopropylamin, Aminomethylpropanol oder Dimethylaminomethylpropanol. Bevorzugte anorganische Basen sind Natriumhydroxid, Kaliumhydroxid, Lithiumhydroxid oder Ammoniak. Fette und Öle pflanzlichen und tierischen Ursprungs können auch der Komponente (G) entsprechen, beispielsweise Rindertalg, Palmkernfett, Kokosfett, Rapsöl, Sonnenblumenöl, Leinöl, Palmöl, Sojaöl, Erdnussöl, Walöl, Baumwollsamenöl, Maisöl, Mohnöl, Olivenöl, Rizinusöl, Distelöl, Sojaöl, Heringsöl, Sardinenöl. Auch die gesättigten und ungesättigten Fettsäuren sind häufigere Additive, z. B. Palmitinsäure, Caprinsäure, Myristinsäure, Laurinsäure, Stearinsäure, Ölsäure, Linolsäure, Linolensäure, Capronsäure, Caprylsäure, Arachinsäure, Behensäure, Palmitoleinsäure, Gadolsäure, Erucasäure und Ricinolsäure sowie deren Salze werden als Pigmentoberflächen-Modifizierer eingesetzt.

Des Weiteren können Lichtstabilisatoren wie zum Beispiel Derivate von Benzotriazol, Campher, Hydroxybenzophenon, Hydroxyphenyltriazin, Oxalanilide, Salicylsäure oder Zimtsäure und Radikalfänger wie zum Beispiel "Hindered-Amine Light Stabilizers" (HALS) Verwendung finden. Derivate basierend auf Tetramethylpiperidin finden Anwendung genauso wie Antioxidationsmittel basierend auf Zitronensäure. Komponente G kann auch den Bereich der Entschäumer basierend auf Mineralöl oder Silikon-Derivaten umfassen.

### Komponente (H)

Wasser, Komponente (H), das zur Herstellung der Pigmentzubereitungen verwendet wird, wird vorzugsweise in Form von destilliertem oder entionisiertem Wasser verwendet. Trinkwasser (Leitungswasser) und / oder Wasser natürlichen Ursprungs können ebenfalls verwendet werden.

Die Pigmentpräparate haben eine hohe Farbstärke und eine geringe Schaumneigung. Sie haben eine Viskosität von weniger als 1,0 Pas, vorzugsweise weniger als 0,7 Pas und besonders bevorzugt weniger als 0,5 Pas. Die Pigmentzubereitungen können mit Alkoholen unterschiedlicher Kettenlänge, vorzugsweise Ethanol, in jedem Verhältnis ohne Koagulation oder Flockung der Pigmentteilchen gemischt werden. Die Pigmentpräparate weisen eine gute Lagerstabilität auf.

Weiterhin können die erfindungsgemäßen Pigmentpräparationen frei von Alkylphenol-, Tristyrylphenol-, Novolak- und Bisphenol A-Derivaten sowie von primären und sekundären Aminen hergestellt werden.

Die vorliegende Erfindung betrifft auch ein Verfahren zur Herstellung solcher Pigmentzubereitungen, indem man die Komponente (A) in Form von Pulver, Granulat oder wässrigem Presskuchen in Gegenwart von Wasser (H) und Komponenten (B) und (C) vorlegt, und gegebenenfalls mit (D), (E), (F) und (G) dispergiert, und gegebenenfalls wird die erhaltene wässrige Pigmentdispersion mit Wasser (H) verdünnt. Das Pigment und die Gemische der Komponenten (B) und (C) werden unter Verwendung einer Dispergiereinheit oder Kombinationen verschiedener Dispergiereinheiten, vorzugsweise einer Rührkugelmühle, dispergiert, die mit einer Rührerumfangsgeschwindigkeit von 10 m / s und darunter betrieben wird die Wirkung von nichtmetallischen Mahlkörpern mit einem Durchmesser von weniger als oder gleich 1,2 mm, vorzugsweise kleiner oder gleich 0,8 mm, die in Gegenwart von Wasser fein verteilt oder fein verteilt sind. Die anderen Additive können vorhanden sein und / oder anschließend beim Dispergierschritt zugegeben werden.

Die Erfindung betrifft auch die Verwendung der erfindungsgemäßen Pigmentzubereitungen als Farbstoffe zum Pigmentieren und Färben von natürlichen und synthetischen Materialien aller Art, insbesondere wässrigen Beschichtungsmaterialien, Farben, Dispersions- und Lackfarben (Lacke auf Wasserbasis), Wasser- verdünnbare Lacke, Glasuren, Lacke und Holzschutzsysteme, Druckfarben, hier zum Beispiel Textildruck, Flexodruck, Dekorationsdruck oder Tiefdruckfarben, elektrophotographische Toner und Entwickler, wie zum Beispiel ein- oder zweikomponentige Pulvertoner (auch als Ein- oder Zweikomponentenentwickler bezeichnet), magnetische Toner, flüssige Toner, Latextoner, Polymerisationstoner sowie spezielle Toner, Tinten, vorzugsweise Tintenstrahltinten, z auf wässriger oder nichtwässriger Basis ("auf Lösungsmittelbasis") Mikroemulsionstinten, UV-härtbare Tinten und solche Tinten, die nach dem Heißschmelzverfahren arbeiten, Tinten zum Schreiben von Utensilien wie Buntstiftminen, Faserstifte, Fineliner, Filzstifte, Gelwalzen, Text- oder Weißboard-Marker sowie Isoliermaterialien wie Glaswolle.

Weiterhin eignen sich die erfindungsgemäßen Pigmentpräparate zum Färben von makromolekularen Materialien aller Art, z. B. aus natürlichen und synthetischen Fasermaterialien. Andere Anwendungen sind das Färben von Wursthüllen, Samen, Düngemitteln, Glas, insbesondere Glasflaschen, Pflastern, Beton, Holzbeizen, Wachsen, Paraffinen, Tinten, Pasten für Stifte, Kreiden, Wasch- und Reinigungsmitteln, Schuhpflegeprodukten, Latexprodukten Schleifmittel zum Viskose-Spin-Färben und zum Färben von Kunststoffen oder hochmolekularen Materialien aller Art. Hochmolekulare organische Materialien sind beispielsweise Celluloseether und -ester wie Ethylcellulose, Nitrocellulose, Celluloseacetat oder Cellulosebutyrat, Naturharze oder Kunstharze wie Polymerisationsharze oder Kondensationsharze, beispielsweise Aminoplasten, insbesondere Harnstoff und Melaminformaldehydharze, Alkydharze, Acrylharze, Phenoplasten, Polycarbonate, Polyolefine wie Polystyrol, Polyvinylchlorid, Polyethylen, Polypropylen, Polyacrylnitril, Polyacrylsäureester, Polyamide, Polyurethane oder Polyester, Kautschuk, Casein, Latices, Silicon, einzeln oder in einer Mischung.

Darüber hinaus können die erfindungsgemäßen Pigmentpräparate auch als Farbmittel für Farbfilter ("Farbfilter") für "Flachbildschirme" sowohl zur additiven als auch zur subtraktiven Farberzeugung, auch für "Fotolacke" und verwendet werden als Farbstoffe für elektronische Tinten ("elektronische Tinten" oder "E-Tinten") oder elektronisches Papier ("elektronisches Papier" oder "E-Papier").

### Definitionen

"Wasserlöslich" bezieht sich auf ein Material, das bei einer Konzentration von 0,1 Gew.-% bei 25 °C eine genügende Löslichkeit aufweist, um eine für das Auge klare Lösung zu erhalten. Der Begriff "wasserunlöslich" bezieht sich auf ein Material, das nicht "wasserlöslich" ist.

"Monomer" bedeutet eine diskrete, nicht polymerisierte chemische Einheit, die in Gegenwart eines Initiators oder einer geeigneten Reaktion, ein Makromolekül erzeugt, wie z. B. radikalische Polymerisation. "Einheit" bedeutet ein Monomer, das bereits polymerisiert wurde, d. h. Teil eines Polymers ist.

"Polymer" bedeutet eine Chemikalie, die aus der Polymerisation von ein, zwei oder mehr Monomeren gebildet wird. Der Begriff "Polymer" umfasst alle Materialien, die von der Polymerisation von Monomeren stammen sowie natürliche Polymere. Polymere, die nur aus einem Monomertyp hergestellt werden, werden als Homopolymere bezeichnet. Hierbei umfasst ein Polymer mindestens zwei Monomer-Einheiten. Polymere, die aus zwei oder mehr verschiedenen Arten von Monomeren gebildet werden, werden als Copolymere bezeichnet. Die Verteilung der verschiedenen Monomere kann zufällig, alternierend oder blockweise sein. Beim letzteren entstehen dann sogenannte "Blockcopolymere". Wird auf die Hauptkette eines bestehenden Polymers mit einem weiteren verschiedenen Polymer funktionalisiert, so entstehen sogenannte "Kammcopolymere" oder "Pfropfcopolymere". Der hier verwendete Begriff "Polymer" umfasst jede Art von Polymer, einschließlich Homopolymere und Copolymere.

### Abkürzungen

- C.I.: "Color Index"
- n.m.: Nicht messbar
- NT: Nicht thixotrop, Pigmentpräparation zeigte newtonisches Verhalten
- LT: Leicht thixotrop, Pigmentpräparation zeigt leichtes nicht-newtonisches Verhalten
- T: Thixotrop, Pigmentpräparation zeigt deutliches nicht-newtonisches Verhalten

### Beispiele

### Bestandteile der beispielhaften Pigmentzubereitungen

### Komponente (A)

### Organische Pigmente

| | |
|---|---|
| A1 | Hansa Brilliant Gelb 2GX 70-S (C.I. Pigment Gelb 74, PY 74) |
| A2 | Novoperm^{®} Gelb HR 03 LV 5462 (C.I. Pigment Gelb 83, PY 83) |
| A3 | Hostaperm^{®} Violett RL 02 (C.I. Pigment Violett 23, PV 23) |
| A4 | Permanent Rot FGR (C.I. Pigment Rot 112, PR 112) |
| A6 | Hostaperm^{®} Rot D3G 70 (C.I. Pigment Rot 254, PR 254) |
| A7 | Hostaperm^{®} Blau A4R (C.I. Pigment Blau 15:1, PB 15:1) |
| A8 | Hostaperm^{®} Blau B2G-EDS VP3491 (C.I. Pigment Blau 15:3, PB 15:3) |
| A9 | Hostaperm^{®} Gruen GNX (C.I. Pigment Grün 7, PG 7) |
| A10 | Printex^{®} 300 (C.I. Pigment Schwarz 7, PBk 7) |

### Anorganische Pigmente

| | |
|---|---|
| A11 | Bayferrox^{®} 3920 (C.I. Pigment Gelb 42, PY 42) |
| A12 | Sicopal^{®} Orange L 2430 (C.I. Pigment Orange 82, PO 82) |
| A13 | Sicopal^{®} Yellow L 1100 (C.I. Pigment Gelb 184, PY 184) |
| A14 | Bayferrox^{®} Rot 130M (C.I. Pigment Rot 101, PR 101) |
| A15 | Kronos^{®} 2160 (C.I. Pigment Weiß 6, PW 6) |

### Dispergiermittel-Komponente (B)

| | |
|---|---|
| B | Statistisches Copolymer bestehend aus 49 mol-% Methacrylsäure und 51 mol-% Polyglykol MA750 |

### Dispergiermittel-Komponente (C)

| | |
|---|---|
| C1 | Verzweigtes Blockcopolymer bestehend aus 1 mol-% Glycerin und 14 mol-% Styroloxid und 85 mol-% Ethylenoxid (gemäß WO-2020152093) |
| C2 | Pfropfcopolymer, bestehend aus dem Umsetzungsprodukt eines Styrol/Maleinsäureanhydrid-Copolymers (Cray Valley SMA 2000, Verhältnis 2:1 Styrol zu Maleinsäureanhydrid) mit einem Äquivalent Jeffamine M-2005 (Firma Huntsman) |

### Vergleichs-Dispergiermittel

| | |
|---|---|
| VD1 | Nuosperse^{®} FX 600 (Elementis), ein multi-funktionelles polymeres Dispergiermittel, empfohlen sowohl für anorganische wie auch organische Pigmente. Nuosperse FX 600 ist ein Polymaleinsäure-Ammoniumsalz, beschrieben in EP1599549B1. |
| VD2 | Dispex^{®} Ultra 4290 (BASF), ein hochmolekulares Dispergiermittel, das für anorganische und organische Pigmente in wässrigen Präparationen geeignet ist. Dispex Ultra 4290 ist ein hochmolekulares Dispergiermittel/Copolymer mit einer Säurezahl von 9 mg KOH/g, vermutlich auf Polyacrylat-Basis. |
| VD3 | Dispersogen^{®} LFS (Clariant), ein anionische Tenside enthaltendes Dispergiermittel für wasser-basierende Pigmentpräparationen, das für alle Pigmente geeignet ist. |
| VD4 | Dispersogen^{®} ECS (Clariant), ein anionische Tenside enthaltendes Dispergiermittel für wasser-bassierende Pigmentpräparationen, das für alle Pigmente geeignet ist. |
| VD5 | Tego^{®} Dispers 750 W (Evonik) ist ein schwach anionisches polymeres Netz- und Dispergieradditiv für hochqualitative wässrige Formulierungen. Es ist sehr gut verträglich und passend für alle Pigmenttypen besonders für anorganische Pigmente. |

Die Pigmentpräparationen wurden entweder in einem Lau Disperser oder in einem Dispermaten hergestellt.

### Herstellung einer Pigmentpräparation im Lau Disperser:

Die flüssigen Komponenten (entionisiertes Wasser, Dispergiermittel, Additive) wurden mittels Shaker (z. B. Heidolph Unimax 2010) homogenisiert. Das Pigment wurde entweder als Pulver, Granulat oder als Presskuchen im Anschluss zusammen mit der flüssigen Vormischung mit einem Paint-Shaker (z. B. Lau Disperser DAS) homogenisiert und vordispergiert. Die anschließende Feindispersion wurde unter Verwendung eines Paint Shakers (z. B. Lau Disperser DAS) durchgeführt, wobei das Mahlen mit Glasperlen der Größe d = 3 mm bei definierter Laufzeit von 60 Minuten durchgeführt wurde. Die Mahlkörper wurden mittels einer Zentrifuge (z. B. Heraeus Multifuge 3s) abgetrennt und die Pigmentzubereitung isoliert.

### Herstellung einer Pigmentpräparation im Dispermaten:

Das Pigment wurde entweder als Pulver, Granulat oder als Presskuchen zusammen mit den Dispergiermitteln und den anderen Additiven in entionisiertem Wasser mit einem Dissolver (z. B. von VMA Getzmann GmbH, Typ AE3-M1) oder einem anderen geeigneten Gerät homogenisiert und vordispergiert. Die anschließende Feindispersion wurde unter Verwendung einer Perlenmühle (zum Beispiel unter Verwendung von AE3-M1 von VMA-Getzmann GmbH) oder einer anderen geeigneten Dispergiereinheit durchgeführt, wobei das Mahlen mit Zirkoniumsilikat- oder Zirkonoxidperlen der Größe d = 1,2 - 1,4 mm bis auf die gewünschte Farbstärke, Farbe und Transparenz durchgeführt wurde. Die Dispersion wurde dann mit entionisiertem Wasser auf die gewünschte Endpigmentkonzentration eingestellt, die Mahlkörper wurden abgetrennt und die Pigmentzubereitung isoliert.

Die in den folgenden Beispielen (Tabelle 1 und 2) beschriebenen Pigmentzubereitungen wurden nach dem oben beschriebenen Verfahren hergestellt, wobei die jeweiligen Bestandteile in den angegebenen Mengen so verwendet wurden, dass 100 Teile der jeweiligen Pigmentzubereitung erhalten werden. In allen Beispielen bedeuten Teile Gewichtsteile.

### Charakterisierung einer Pigmentpräparation:

Die Viskosität wurde unter Verwendung eines Kegelplattenviskosimeters (MCR 72) der Anton Paar GmbH bei 20 °C (Titankegel: Durchmesser 60 mm, 1°) bestimmt, wobei die Abhängigkeit der Viskosität von der Schergeschwindigkeit in einem Bereich zwischen 0 und 200 s⁻¹ gemessen wurde. Die Viskosität von jeder Probe wurde mit einer Schergeschwindigkeit von 60 s⁻¹ bewertet.

Die Farbstärke wurde anhand von Spektralmessungen bestimmt. Dazu wird von den Pasten eine 2%ige Abtönung in einer Weißdispersionsfarbe hergestellt. Die Abtönung wird mittels Filmziehrakeln mit einer Spalthöhe von 120µm auf Testsubstrat aufgetragen und über Nacht getrocknet. Mit einem Spektralphotometer werden die Farbwerte der Farbaufzüge vermessen. Aus den gemessenen Farbwerten berechnet sich die Farbstärke nach ISO 787-26.

Zur Beurteilung der Lagerstabilität der Dispersionen wurde die Viskosität direkt nach der Herstellung der Zubereitung und nach 14-tägiger Lagerung bei 50 °C gemessen. Zusätzlich wurde die Farbstärke der auf diese Weise gelagerten Probe gegen eine bei Raumtemperatur gelagerte Probe ermittelt. Zusätzlich wurden die Homogenität und das Sedimentationsverhalten der gelagerten Probe durch Bestimmung des gebildeten Bodensatzes sowie Serums bewertet.

### Bewertung:

Die Bewertung erfolgt anhand der folgenden 4 Parameter: Thixotropie, Stabilität, Viskosität und Farbstärke. Die Einstufung erfolgte wie nachgehend beschrieben:
Thixotropie: NT = Nicht Thixotrop, die Paste bildet keine Struktur Viskosität aus, wird bei Lagerbedingungen also nicht Viskoser oder sogar fest. LT = Leicht Thixotrop, die Paste bildet bei Lagerung eine erhöhte Viskosität aus oder wird sogar nicht fließfähig. Mit Einwirkung von schon wenig Energie zum Beispiel in Form von Scherung lässt sich die Paste aber wieder verflüssigen. T = Thixotrop, die Paste verfestigt sich bei Lagerbedingungen und ist nicht mehr fließfähig, wird aber bei erhöhter Einwirkung von Energie wieder zeitweise fließfähig.
Stabilität: 3 = Die Paste ist auch über einen Lagerzeitraum homogen, bildet weder Serum oder Sedimentation aus. 2 = Die Paste bildet über den Zeitraum der Lagerung leicht aufrührbares Serum an der Oberfläche oder Sediment am Boden aus. 1 = Die Paste bildet über den Zeitraum der Lagerung 2-Phasen oder bildet einen nicht oder nur schwer aufrührbares Sediment am Boden aus.
Viskosität: Die Bewertung der Viskosität hängt stark vom zu dispergierenden Pigment ab. Generelles Ziel ist es, eine fließfähige Pigmentpaste herzustellen. Deren Viskosität liegt normalerweise in einem Zielbereich zwischen 50 und 1000 mPa*s.
Farbstärke: Die Farbwerte wurden nach 14Tagen Lagerung gegen die Werte eines Referenzprodukt gemessen. Farbstärken über 100% sind besser als die Referenz. Ausnahme sind weiße Pigmentpasten, bei diesen sind Werte unter 100% besser als die Referenz.

### Zusammenfassende Bewertung erfolgt anhand der folgenden 4 Stufen:

Besser: Alle Parameter im gewünschten Bereich (mindestens -OK), aber besser als Standarddispergiermittel (verwendete Standarddispergiermittel: Dispersogen LFS für organische und Ruß Pigmente, Dispersogen ECS für anorganische Pigmente)
OK: Alle Parameter im gewünschten Bereich, vergleichbar mit Standarddispergiermittel
Fast OK (~OK): Ein Parameter ist nicht erfüllt (Präparate zeigen häufig leichte Thixotropie und sind etwas farbschwächer als Präparate hergestellt mit Standarddispergiermittel);
Nicht OK (NOK): Mindestens 2 Parameter sind nicht erfüllt (Präparate zeigen hohe Viskosität und Stabilitätsprobleme und sind deutlich farbschwächer als Präparationen hergestellt mit Standarddispergiermittel)

**Tabelle 1: Ergebnisse der Pigmentpasten**

| Beispiel | Pigment | Pigmentkonzentration in Gewichtsteilen | Dispergiermittel in Gewichtsanteilen | Thixotropie | Stabilität | Viskosität (mPa*s) | Farbstärke nach 14 Tagen | Bewertung |
|---|---|---|---|---|---|---|---|---|
| 1(V) | A1 | 50 | 6 VD5 | NT | 1 | 283 | 96,7 | NOK |
| 2(V) | A1 | 50 | 6 VD1 | T | 3 | 3058 | 77,7 | NOK |
| 3(V) | A1 | 50 | 6 VD2 | NT | 3 | 347 | 96,9 | OK |
| 5 | A1 | 50 | 5,5 B + 1,0 C2 | NT | 3 | 631 | 120,6 | Besser |
| 6 | A1 | 50 | 2,2 B + 1,8 C1 | NT | 3 | 166 | 105,8 | Besser |
| | | | | | | | | |
| 7(V) | A2 | 35 | 8 VD5 | n.m. | n.m. | n.m. | n.m. | NOK, Koaguliert |
| 8(V) | A2 | 35 | 8 VD1 | NT | 3 | 105 | 88,0 | ~OK |
| 9(V) | A2 | 35 | 8 VD2 | NT | 2 | 123 | 99,2 | ~OK |
| | | | | | | | | |
| 10 | A2 | 35 | 6 B + 2 C2 | NT | 3 | 90 | 92,8 | OK |
| 11 | A2 | 35 | 6,8 B + 1,2 C2 | NT | 3 | 92 | 91 | OK |
| 12 | A2 | 35 | 4,4 B + 3,6 C1 | NT | 3 | 71 | 93,7 | OK |
| | | | | | | | | |
| 13(V) | A7 | 35 | 8 VD5 | n.m. | n.m. | n.m. | n.m. | NOK, koaguliert |
| 14(V) | A7 | 35 | 8 VD1 | NT | 2 | 55 | 74,6 | NOK |
| 15(V) | A7 | 35 | 8 VD2 | NT | 3 | 218 | 84,1 | OK |
| 16 | A7 | 35 | 6B+2C2 | NT | 3 | 450 | 86,3 | OK |
| 17 | A7 | 35 | 6,8 B + 1,2 C2 | NT | 3 | 478 | 89,5 | OK |
| 18 | A7 | 35 | 4,4 B + 3,6C1 | NT | 3 | 359 | 87,0 | OK |
| | | | | | | | | |
| 19(V) | A8 | 45 | 6 VD5 | n.m. | n.m. | n.m. | n.m. | NOK, koaguliert |
| 20(V) | A8 | 45 | 6 VD1 | T | 3 | 2492 | 78,6 | NOK |
| 21(V) | A8 | 45 | 6 | NT | 3 | 175 | 74,1 | ~OK |
| 22 | A8 | 45 | 5,5 B + 1,0 C2 | NT | 3 | 274 | 82,6 | OK |
| 23 | A8 | 45 | 3,6 B + 2,9 C1 | NT | 3 | 274 | 79,1 | OK |
| | | | | | | | | |
| 24(V) | A3 | 30 | 7 VD5 | T | 3 | 956 | 74,6 | NOK |
| 25(V) | A3 | 30 | 7 VD1 | NT | 2 | 29 | 89,0 | ~OK |
| 26(V) | A3 | 30 | 7 VD2 | NT | 2 | 37 | 84,2 | ~OK |
| 27 | A3 | 30 | 5,5 B + 1,0 C2 | NT | 3 | 89 | 84,3 | OK |
| 28 | A3 | 30 | 3,6 B + 2,9 C1 | NT | 3 | 136 | 87,7 | OK |
| | | | | | | | | |
| 29(V) | A9 | 40 | 6 VD5 | n.m. | n.m. | n.m. | n.m. | NOK, koaguliert |
| 30(V) | A9 | 40 | 6 VD1 | T | 3 | 253 | 79,0 | ~OK |
| 31(V) | A9 | 40 | 6 VD2 | NT | 1 | 145 | 91,3 | NOK |
| 32 | A9 | 40 | 6 B + 2 C2 | NT | 3 | 894 | 79,6 | OK |
| 33 | A9 | 40 | 5,1 B + 0,9 C2 | NT | 3 | 631 | 80,3 | OK |
| 34 | A9 | 40 | 4,4 B + 3,6 C1 | NT | 3 | 582 | 81,9 | OK |
| | | | | | | | | |
| 35(V) | M | 45 | 6 VD5 | NT | 1 | 268 | 59,5 | NOK |
| 36(V) | M | 45 | 6 VD1 | T | 3 | 652 | 82,0 | ~OK |
| 37(V) | A4 | 45 | 6 VD2 | NT | 3 | 311 | 63,7 | ~OK |
| 38 | M | 45 | 4,5 B + 1,5 C2 | NT | 3 | 891 | 80,6 | OK |
| 39 | A4 | 45 | 5,1 B + 0,9 C2 | NT | 3 | 932 | 81,8 | OK |
| 40 | A4 | 45 | 3,3 B + 2,7C1 | NT | 3 | 799 | 89,3 | OK |
| | | | | | | | | |
| 41(V) | A10 | 35 | 7 VD5 | n.m | n.m. | n.m. | n.m. | NOK, koaguliert |
| 42(V) | A10 | 35 | 7 VD1 | NT | 2 | 453 | 83,8 | ~OK |
| 43(V) | A10 | 35 | 7 VD2 | NT | 3 | 70 | 91,0 | OK |
| 44 | A10 | 35 | 5,5 B + 1 C2 | NT | 3 | 77 | 91,2 | OK |
| 45 | A10 | 35 | 3,6 B + 2,9 C1 | NT | 3 | 68 | 92,3 | OK |
| | | | | | | | | |
| 46(V) | A14 | 60 | 4 VD5 | NT | 1 | n.m. | n.m. | NOK |
| 47(V) | A14 | 60 | 4 VD1 | T | 3 | 336 | 99,7 | ~OK |
| 48(V) | A14 | 60 | 4 VD2 | NT | 1 | n.m. | n.m. | NOK |
| 49 | A14 | 65 | 3 B + 1 C2 | NT | 2 | 237 | 106,5 | besser |
| 50 | A14 | 65 | 3,4 B + 0,6 C2 | NT | 2 | 191 | 106,5 | besser |
| 51 | A14 | 65 | 2,2 B + 1,8C1 | NT | 2 | 148 | 105,9 | besser |
| | | | | | | | | |
| 52(V) | A11 | 55 | 6 VD5 | n.m. | n.m. | n.m. | n.m. | NOK, koaguliert |
| 53(V) | A11 | 55 | 6 VD1 | n.m. | n.m. | n.m. | n.m. | NOK, koaguliert |
| 54(V) | A11 | 55 | 6 VD2 | NT | 2 | 179 | 100,1 | ~OK |
| 55 | A14 | 55 | 1,7 B + 1,3 C2 | NT | 3 | 265 | 101,9 | besser |
| 56 | A11 | 55 | 2,6 B + 0,4 C1 | NT | 3 | 299 | 99,8 | besser |
| | | | | | | | | |
| 57(V) | A15 | 65 | 4 VD5 | NT | 1 | 225 | 109,8 | NOK |
| 58(V) | A15 | 65 | 6 VD5 | NT | 2 | 327 | 113,8 | besser |
| 59(V) | A15 | 65 | 4 VD1 | T | 3 | 635 | 107,1 | ~OK |
| 60(V) | A15 | 65 | 4 VD2 | n.m. | n.m. | n.m. | n.m. | NOK |
| 61(V) | A15 | 65 | 6 VD2 | NT | 1 | 350 | 114,2 | NOK |
| 62 | A15 | 65 | 4,5 B + 1,5 C2 | NT | 2 | 372 | 114,6 | besser |
| 63 | A15 | 65 | 3,4 B + 0,6 C2 | NT | 2 | 169 | 111,4 | besser |
| 64 | A15 | 65 | 5,5 B + 1 C2 | LT | 3 | 443 | 112,7 | besser |
| 65 | A15 | 65 | 3,6 B + 2,9 C1 | NT | 3 | 350 | 111,5 | besser |

Allen Beispielen der Tabelle 1 wurden 10,0 Teile der Komponente (E, Propylenglykol), 0,2 Teile der Komponente (F Konservierungsmittel), 0,3 Teile der Komponente (G, Entschäumer) und Ausgleichskomponente (H, deionisiertes Wasser) hinzugefügt.

Die Zahlenwerte aus den Beispielen der Tabelle 1 zeigen deutlich die verbesserte und vor allem universelle Performance der erfindungsgemäßen Mischungen im Vergleich zu bekannten universellen Dispergiermitteln, die kommerziell erhältlich sind.

### Beispiele 133-135

**Tabelle 2: Synergetische Effekte bei Pigmentpasten**

| Beispiel | Pigment | Pigmentkonzentration in Gewichtsteilen | Dispergiermittel in Gewichtsanteilen | Thixotropie | Stabilität | Viskosität (mPa*s) | Farbstärke nach 14 Tagen | Bewertung |
|---|---|---|---|---|---|---|---|---|
| 66(V) | A1 | 50 | 6 C2 | NT | 3 | 459 | 91,3 | OK |
| 67(V) | A1 | 50 | 6 C1 | NT | 3 | 399 | 98,3 | OK |
| 68(V) | A1 | 50 | 6 B | NT | 2 | 12030 | 75,4 | NOK |
| 5 | A1 | 50 | 5,5 B + 1,0 C2 | NT | 3 | 631 | 120,6 | Besser |
| 6 | A1 | 50 | 2,2 B + 1,8 C1 | NT | 3 | 166 | 105,8 | Besser |
| 69(V) | A4 | 45 | 6 C2 | NT | 3 | 293 | 74,5 | ~OK |
| 70(V) | A4 | 45 | 6 C1 | NT | 3 | 172 | 87,4 | OK |
| 71(V) | A4 | 45 | 6 B | NT | 3 | 381 | 62,0 | NOK |
| 38 | A4 | 45 | 4,5 B + 1,5 C2 | NT | 3 | 891 | 80,6 | OK |
| 39 | A4 | 45 | 5,1 B + 0,9 C2 | NT | 3 | 932 | 81,8 | OK |
| 40 | A4 | 45 | 3,3 B + 2,7 C1 | NT | 3 | 799 | 89,3 | OK |
| 72(V) | A10 | 35 | 7 C2 | NT | 3 | 83 | 86,7 | ~OK |
| 73(V) | A10 | 35 | 7 C1 | NT | 3 | 59 | 82,7 | ~OK |
| 74(V) | A10 | 35 | 7 B | NT | 3 | 83 | 75,9 | -OK |
| 44 | A10 | 35 | 5,5 B + 1 C2 | NT | 3 | 77 | 91,2 | OK |
| 45 | A10 | 35 | 3,6 B + 2,9 C1 | NT | 3 | 68 | 92,3 | OK |
| 75(V) | A11 | 55 | 6 C2 | LT | 3 | 1220 | 96,2 | ~OK |
| 76(V) | A11 | 55 | 6 C1 | n.m. | n.m. | n.m. | n.m. | NOK |
| 77(V) | A11 | 55 | 6 B | NT | 2 | 293 | 95,6 | ~OK |
| 55 | A14 | 55 | 1,7 B + 1,3 C2 | NT | 3 | 265 | 101,9 | besser |
| 56 | A11 | 55 | 2,6 B + 0,4 C1 | NT | 3 | 299 | 99,8 | besser |

Die Zahlenwerte aus den Beispielen der Tabelle 2 zeigen deutlich, dass die erfindungsgemäßen Mischungen auch synergistische Auswirkungen haben, die von den Einzelkomponenten nicht vorhersehbar waren. So zeigten die Pigmentpräparation des organischen Pigments Gelb PY 74 (A1) mit B2 eine starke Unverträglichkeit und eine hohe Viskosität. Präparate mit C2 waren von der Bewertung zwar OK, zeigten aber eine leichte Farbschwäche. Ein Gemisch aus B2/C2 im Massen-Verhältnis 85/15 ergibt eine stabile Pigmentpräparation mit sehr niedriger Viskosität und sehr guter Verträglichkeit bei stark verbesserter Farbstärke. Bei anderen organischen Pigmenten wie z. B. Pigment Rot PR 112 (A4), Ruß (A10) und beim anorganischen Pigment PY 42 (A11) sind ähnliche synergistische Effekte zu beobachten.

## Patentansprüche

1. Pigmentzubereitung, enthaltend
(A) mindestens ein organisches und / oder anorganisches Pigment und / oder Füllstoff;
(B) mindestens ein anionisches Copolymer als Dispergiermittel, welches
(I) 40 bis 95 mol-% Struktureinheiten eines anionischen Monomers enthält, welches ausgewählt ist aus der Gruppe bestehend aus Acrylsäure, Methacrylsäure, Itaconsäure, 2-Carboxyethylacrylsäure, Maleinsäure, deren Gemische und ihren jeweiligen Salzen, vorzugsweise Methacrylsäure oder ihr Salz, und
(II) 5 bis 60 mol-% Struktureinheiten eines Monomers mit Wiederholungseinheiten gemäß Formel (B1) 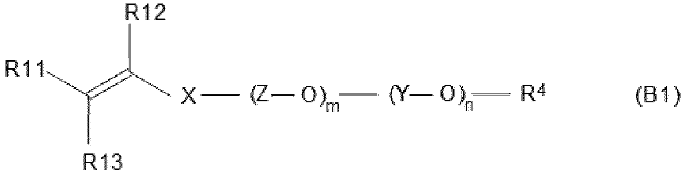 worin
R11, R12, R13 unabhängig voneinander ausgewählt sind aus der Gruppe bestehend aus H, Methyl, Ethyl,
R4 H oder eine Alkylgruppe mit 1 bis 4 Kohlenstoffatomen,
X ausgewählt ist aus der Gruppe bestehend aus O, COO, CONH, CH₂O oder CH₂CH₂O,
Y eine Ethylengruppe
Z eine Propylengruppe, eine Butylengruppe oder eine Phenylethylengruppe,
m eine ganze Zahl von 0 bis 100,
n eine ganze Zahl von 1 bis 100, und
m + n größer als 5 ist, und
(C) mindestens ein nichtionisches Copolymer, welches mindestens eine Struktureinheit mit aromatischen Gruppen und mindestens eine Struktureinheit mit Polyethylenglykolgruppen enthält, und
(H) Wasser.

2. Pigmentzubereitung nach Anspruch 1, worin die Struktureinheit (I) von (B) Acrylsäure oder Methacrylsäure, oder deren Salze, besonders bevorzugt Methacrylsäure oder deren Salze ist.

3. Pigmentzubereitung nach Anspruch 1 und/oder 2, worin der Anteil der Struktureinheiten (I) von 45 bis 85 mol-% beträgt.

4. Pigmentzubereitung nach einem oder mehreren der Ansprüche 1 bis 3, worin der Anteil der Struktureinheiten (II) von 15 bis 55 mol-% beträgt.

5. Pigmentzubereitung nach einem oder mehreren der Ansprüche 1 bis 4, worin R11, R12, R13 unabhängig voneinander ausgewählt sind aus der Gruppe bestehend aus H oder Methyl.

6. Pigmentzubereitung nach einem oder mehreren der Ansprüche 1 bis 5, worin R12 für Methyl und R11 und R13 für H stehen.

7. Pigmentzubereitung nach einem oder mehreren der Ansprüche 1 bis 6, worin für H oder eine Methylgruppe steht.

8. Pigmentzubereitung nach einem oder mehreren der Ansprüche 1 bis 7, worin X für O oder C(O)O steht.

9. Pigmentzubereitung nach einem oder mehreren der Ansprüche 1 bis 8, worin Z für Propylen oder Phenylethylen steht

10. Pigmentzubereitung nach einem oder mehreren der Ansprüche 1 bis 9, worin m für eine ganze Zahl von 1 bis 10, besonders bevorzugt von 2 bis 5, beispielsweise 3 oder 4 steht.

11. Pigmentzubereitung nach einem oder mehreren der Ansprüche 1 bis 10, worin n für eine ganze Zahl von 5 bis 45, besonders bevorzugt 8 bis 14, steht.

12. Pigmentzubereitung nach einem oder mehreren der Ansprüche 1 bis 11, worin (m+n) für eine ganze Zahl von 8 bis 49 steht.

13. Pigmentzubereitung nach einem oder mehreren der Ansprüche 1 bis 12, worin das Copolymer (C) neben mindestens einer Struktureinheit mit Polyoxyethylengruppen eine Struktureinheit mit aromatischen Gruppen, welche sich von Styroloxid ableiten, umfasst.

14. Pigmentzubereitung nach einem oder mehreren der Ansprüche 1 bis 12, worin die Copolymere (C) der Formel (3), der Formel (4), oder deren Mischungen entsprechen 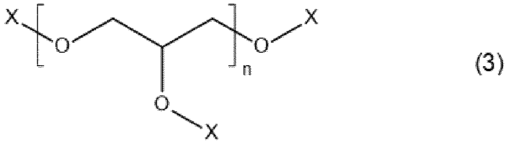 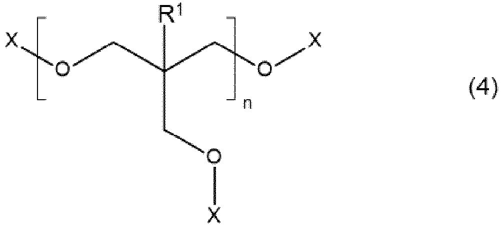 wobei
n eine ganze Zahl größer oder gleich 1, vorzugsweise gleich 1
R¹ ein aliphatischer, linearer oder verzweigter Kohlenwasserstoffrest mit 1 bis 10 Kohlenstoffatomen, ein Wasserstoffatom, die Struktureinheit -O-X, oder die Struktureinheit -CH₂-O-X ist, vorzugsweise ein Wasserstoffatom,
X der Formel (5) entspricht 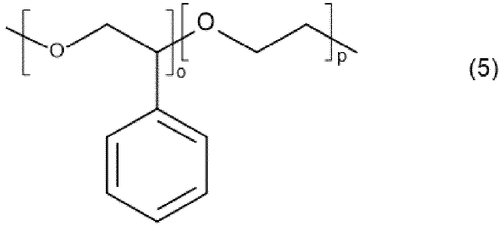 worin
o eine ganze Zahl von 1 bis 50, vorzugsweise eine ganze Zahl von 1 bis 4
p eine ganze Zahl von 1 bis 200, vorzugsweise eine ganze Zahl von 10 bis 25 und
(o+p) größer als 2 ist, vorzugsweise eine ganze Zahl von 2 bis 250.

15. Pigmentzubereitung nach einem oder mehreren der Ansprüche 1 bis 12, worin die Copolymere (C) der Formel (6) entsprechen 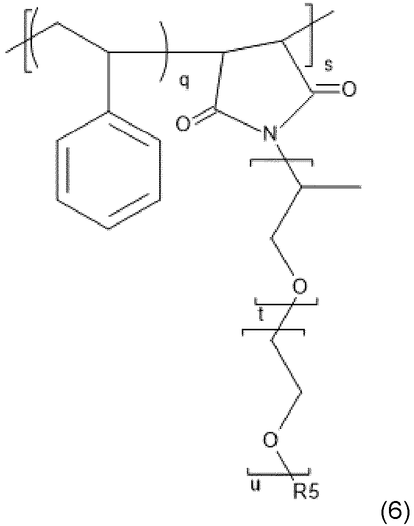 worin
q eine ganze Zahl von 1 bis 4, besonders bevorzugt eine ganze Zahl von 1 bis 2
s eine ganze Zahl von 5 bis 50, besonders bevorzugt eine ganze Zahl von 5 bis 20,
R5 H oder einer Alkylgruppe mit 1 bis 4 Kohlenstoffatomen, besonders bevorzugt Methyl,
t eine ganze Zahl von 0 bis 10, besonders bevorzugt eine ganze Zahl von 1 bis 4,
u eine ganze Zahl von 1 bis 100, besonders bevorzugt eine ganze Zahl von 10 bis 50, und
t + u größer als 10 ist.

16. Pigmentzubereitung nach einem oder mehreren der Ansprüche 1 bis 15, worin 5 bis 80 Gew.-% der Komponente (A) enthalten sind.

17. Pigmentzubereitung nach einem oder mehreren der Ansprüche 1 bis 16, worin 1 bis 20 Gew.-% der Komponente (B) enthalten sind.

18. Pigmentzubereitung nach einem oder mehreren der Ansprüche 1 bis 17, worin 1 bis 20 Gew.-% der Komponente (C) enthalten sind.

19. Verwendung einer Kombination von Polymeren (B) und (C) als Dispergiermittel, wobei
(B) ein anionisches Copolymer ist, welches
(I) 40 bis 95 mol-% Struktureinheiten eines anionischen Monomers enthält, welches ausgewählt ist aus der Gruppe bestehend aus Acrylsäure, Methacrylsäure, Itaconsäure, 2-Carboxyethylacrylsäure, Maleinsäure, deren Gemische und ihren jeweiligen Salzen, vorzugsweise Methacrylsäure oder ihr Salz, und
(II) 5 bis 60 mol-% Struktureinheiten eines Monomers mit Wiederholungseinheiten gemäß Formel (B1) 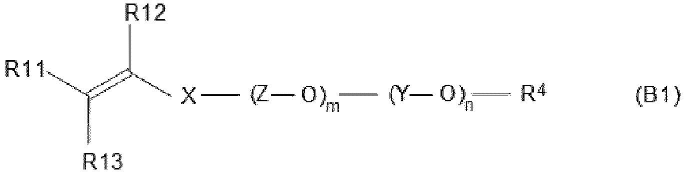 worin
R11, R12, R13 unabhängig voneinander ausgewählt sind aus der Gruppe bestehend aus H, Methyl, Ethyl,
R4 H oder eine Alkylgruppe mit 1 bis 4 Kohlenstoffatomen,
X ausgewählt ist aus der Gruppe bestehend aus O, COO, CONH, CH₂O oder CH₂CH₂O,
Y eine Ethylengruppe
Z eine Propylengruppe, eine Butylengruppe oder eine Phenylethylengruppe,
m eine ganze Zahl von 0 bis 100,
n eine ganze Zahl von 1 bis 100, und
m + n größer als 5 ist, und
(C) ein nichtionisches Copolymer ist, welches mindestens eine Struktureinheit mit aromatischen Gruppen und mindestens eine Struktureinheit mit Polyethylenglykolgruppen enthält,
in der Herstellung einer Pigmentzubereitung, enthaltend
(A) mindestens ein organisches und / oder anorganisches Pigment und / oder Füllstoff, und
(H) Wasser.

## Claims

1. Pigment preparation comprising
(A) at least one organic and/or inorganic pigment and/or filler;
(B) at least one anionic copolymer as dispersant, which contains
(I) 40 to 95 mol% of structural units of an anionic monomer which is selected from the group consisting of acrylic acid, methacrylic acid, itaconic acid, 2-carboxyethylacrylic acid, maleic acid, mixtures thereof and their respective salts, preferably methacrylic acid or its salt, and
(II) 5 to 60 mol% of structural units of a monomer having repeat units of formula (B1) 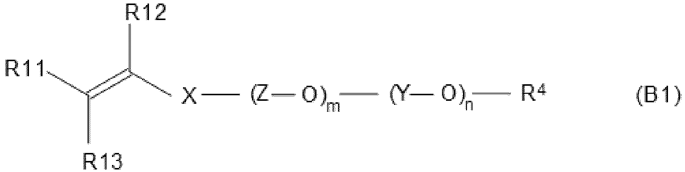 in which
R11, R12 and R13 independently of one another are selected from the group consisting of H, methyl and ethyl,
R4 is H or an alkyl group having 1 to 4 carbon atoms,
X is selected from the group consisting of O, COO, CONH, CH₂O or CH₂CH₂O,
Y is an ethylene group
Z is a propylene group, a butylene group or a phenylethylene group,
m is an integer from 0 to 100,
n is an integer from 1 to 100, and
m + n is greater than 5, and
(C) at least one nonionic copolymer, which contains at least one structural unit having aromatic groups and at least one structural unit having polyethylene glycol groups, and
(H) water.

2. Pigment preparation according to Claim 1, wherein the structural unit (I) of (B) is acrylic acid or methacrylic acid, or salts thereof, more preferably methacrylic acid or salts thereof.

3. Pigment preparation according to Claim 1 and/or 2, wherein the fraction of the structural units (I) is from 45 to 85 mol%.

4. Pigment preparation according to one or more of Claims 1 to 3, wherein the fraction of the structural units (II) is from 15 to 55 mol%.

5. Pigment preparation according to one or more of Claims 1 to 4, in which R11, R12 and R13 independently of one another are selected from the group consisting of H or methyl.

6. Pigment preparation according to one or more of Claims 1 to 5, wherein R12 is methyl and R11 and R13 are H.

7. Pigment preparation according to one or more of Claims 1 to 6, wherein is H or a methyl group.

8. Pigment preparation according to one or more of Claims 1 to 7, wherein X is O or C(O)O.

9. Pigment preparation according to one or more of Claims 1 to 8, wherein Z is propylene or phenylethylene.

10. Pigment preparation according to one or more of Claims 1 to 9, wherein m is an integer from 1 to 10, more preferably from 2 to 5, for example 3 or 4.

11. Pigment preparation according to one or more of Claims 1 to 10, wherein n is an integer from 5 to 45, more preferably 8 to 14.

12. Pigment preparation according to one or more of Claims 1 to 11, wherein (m+n) is an integer from 8 to 49.

13. Pigment preparation according to one or more of Claims 1 to 12, wherein the copolymer (C) comprises not only at least one structural unit having polyoxyethylene groups but also a structural unit having aromatic groups which derive from styrene oxide.

14. Pigment preparation according to one or more of Claims 1 to 12, wherein the copolymers (C) correspond to the formula (3), to the formula (4), or to mixtures thereof 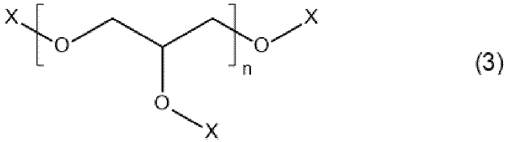 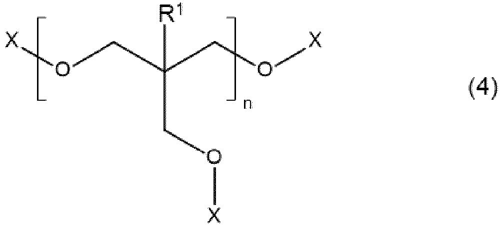 where
n is an integer greater than or equal to 1, preferably equal to 1,
R¹ is an aliphatic, linear or branched hydrocarbon radical having 1 to 10 carbon atoms, a hydrogen atom, the structural unit -O-X, or the structural unit -CH₂-OX, preferably a hydrogen atom,
X corresponds to the formula (5) 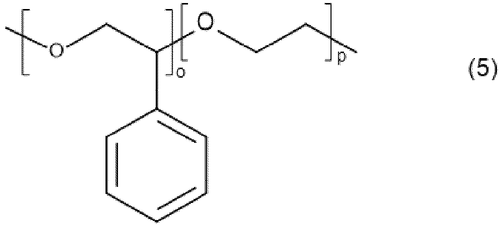 in which
o is an integer from 1 to 50, preferably is an integer from 1 to 4,
p is an integer from 1 to 200, preferably is an integer from 10 to 25, and
(o+p) is greater than 2, preferably is an integer from 2 to 250.

15. Pigment preparation according to one or more of Claims 1 to 12, wherein the copolymers (C) correspond to the formula (6) 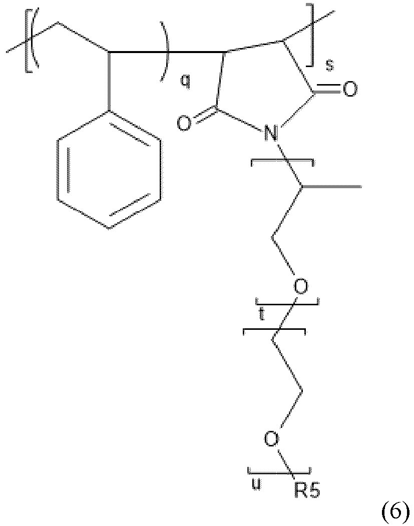 in which
q is an integer from 1 to 4, more preferably is an integer from 1 to 2,
s is an integer from 5 to 50, more preferably is an integer from 5 to 20,
R5 is H or an alkyl group having 1 to 4 carbon atoms, more preferably methyl,
t is an integer from 0 to 10, more preferably is an integer from 1 to 4,
u is an integer from 1 to 100, more preferably is an integer from 10 to 50, and
t + u is greater than 10.

16. Pigment preparation according to one or more of Claims 1 to 15, comprising 5 to 80 wt% of component (A).

17. Pigment preparation according to one or more of Claims 1 to 16, comprising 1 to 20 wt% of component (B).

18. Pigment preparation according to one or more of Claims 1 to 17, comprising 1 to 20 wt% of component (C).

19. Use of a combination of polymers (B) and (C) as dispersant, wherein
(B) is an anionic copolymer which contains
(I) 40 to 95 mol% of structural units of an anionic monomer which is selected from the group consisting of acrylic acid, methacrylic acid, itaconic acid, 2-carboxyethylacrylic acid, maleic acid, mixtures thereof and their respective salts, preferably methacrylic acid or its salt, and
(II) 5 to 60 mol% of structural units of a monomer having repeat units of formula (B1) 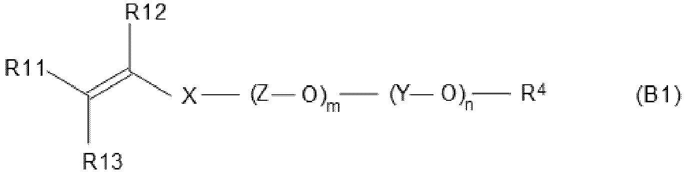 in which
R11, R12 and R13 independently of one another are selected from the group consisting of H, methyl and ethyl,
R4 is H or an alkyl group having 1 to 4 carbon atoms,
X is selected from the group consisting of O, COO, CONH, CH₂O or CH₂CH₂O,
Y is an ethylene group
Z is a propylene group, a butylene group or a phenylethylene group,
m is an integer from 0 to 100,
n is an integer from 1 to 100, and
m + n is greater than 5, and
(C) is a nonionic copolymer, which contains at least one structural unit having aromatic groups and at least one structural unit having polyethylene glycol groups,
in the production of a pigment preparation comprising
(A) at least one organic and/or inorganic pigment and/or filler, and
(H) water.

## Revendications

1. Préparation de pigment contenant
(A) au moins un pigment organique et/ou inorganique et/ou une charge ;
(B) au moins un copolymère anionique en tant que dispersant, qui contient
(I) 40 à 95 % en moles d'unités structurales d'un monomère anionique, qui est choisi dans le groupe constitué par l'acide acrylique, l'acide méthacrylique, l'acide itaconique, l'acide 2-carboxyéthylacrylique, l'acide maléique, leurs mélanges et leurs sels respectifs, de préférence l'acide méthacrylique ou son sel, et
(II) 5 à 60 % en moles d'unités structurales d'un monomère ayant des unités de répétition selon la formule (B1) 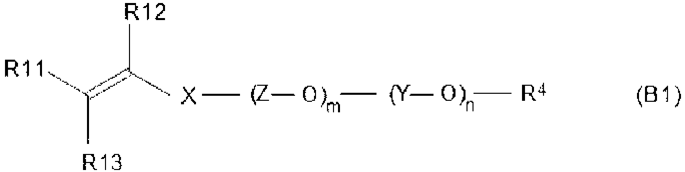 dans laquelle
R11, R12, R13 sont choisis indépendamment les uns des autres dans le groupe constitué par H, méthyle, éthyle, R4 représente H ou un groupe alkyle ayant de 1 à 4 atomes de carbone, X est choisi dans le groupe constitué par O, COO, CONH, CH₂O ou CH₂CH₂O,
Y représente un groupe éthylène
Z représente un groupe propylène, un groupe butylène ou un
groupe phényléthylène,
m est un nombre entier de 0 à 100,
n est un nombre entier de 1 à 100, et
m + n est supérieur à 5, et
(C) au moins un copolymère non ionique, qui contient au moins une unité structurale avec des groupes aromatiques et au moins une unité structurale avec des groupes polyéthylène glycol, et
(H) de l'eau.

2. Préparation de pigment selon la revendication 1, dans laquelle l'unité structurale (I) de (B) est l'acide acrylique ou l'acide méthacrylique, ou leurs sels, de manière particulièrement préférée l'acide méthacrylique ou ses sels.

3. Préparation de pigment selon la revendication 1 et/ou 2, dans laquelle la proportion des unités structurales (I) est de 45 à 85 % en moles.

4. Préparation de pigment selon une ou plusieurs des revendications 1 à 3, dans laquelle la proportion des unités structurales (II) est de 15 à 55 % en moles.

5. Préparation de pigment selon une ou plusieurs des revendications 1 à 4, dans laquelle R11, R12, R13 sont choisis indépendamment les uns des autres dans le groupe constitué par H ou méthyle.

6. Préparation de pigment selon une ou plusieurs des revendications 1 à 5, dans laquelle R12 représente méthyle et R11 et R13 représentent H.

7. Préparation de pigment selon une ou plusieurs des revendications 1 à 6, dans laquelle représente H ou un groupe méthyle.

8. Préparation de pigment selon une ou plusieurs des revendications 1 à 7, dans laquelle X représente O ou C(O)O.

9. Préparation de pigment selon une ou plusieurs des revendications 1 à 8, dans laquelle Z représente le propylène ou le phényléthylène

10. Préparation de pigment selon une ou plusieurs des revendications 1 à 9, dans laquelle m représente un nombre entier de 1 à 10, de manière particulièrement préférée de 2 à 5, par exemple 3 ou 4.

11. Préparation de pigment selon une ou plusieurs des revendications 1 à 10, dans laquelle n représente un nombre entier de 5 à 45, de manière particulièrement préférée de 8 à 14.

12. Préparation de pigment selon une ou plusieurs des revendications 1 à 11, dans laquelle (m+n) représente un nombre entier de 8 à 49.

13. Préparation de pigment selon une ou plusieurs des revendications 1 à 12, dans laquelle le copolymère (C) comprend, en plus d'au moins une unité structurale ayant des groupes polyoxyéthylène, une unité structurale ayant des groupes aromatiques qui dérivent d'oxyde de styrène.

14. Préparation de pigment selon une ou plusieurs des revendications 1 à 12, dans laquelle les copolymères (C) correspondent à la formule (3), à la formule (4), ou à des mélanges de celles-ci 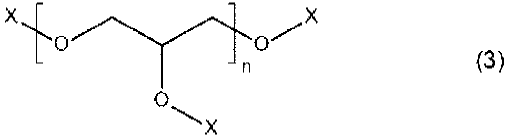 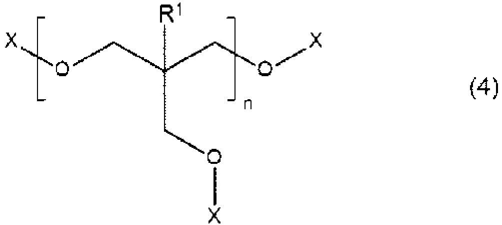 dans lesquelles
n est un nombre entier supérieur ou égal à 1, de préférence égal à 1
R¹ est un radical hydrocarboné aliphatique, linéaire ou ramifié, ayant de 1 à 10 atomes de carbone, un atome d'hydrogène, l'unité structurale -O-X ou l'unité structural -CH₂-O-X, de préférence un atome d'hydrogène,
X correspond à la formule (5) 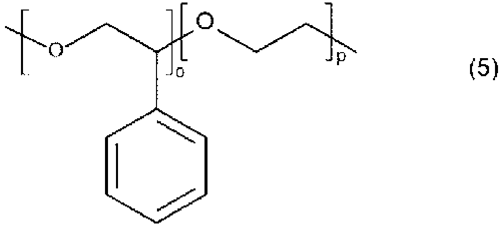
dans laquelle
o est un nombre entier de 1 à 50, de préférence un nombre entier de 1 à 4
p est un nombre entier de 1 à 200, de préférence un nombre entier de 10 à 25, et
(o+p) est supérieur à 2, de préférence un nombre entier de 2 à 250.

15. Préparation de pigment selon une ou plusieurs des revendications 1 à 12, dans laquelle les copolymères (C) correspondent à la formule (6) 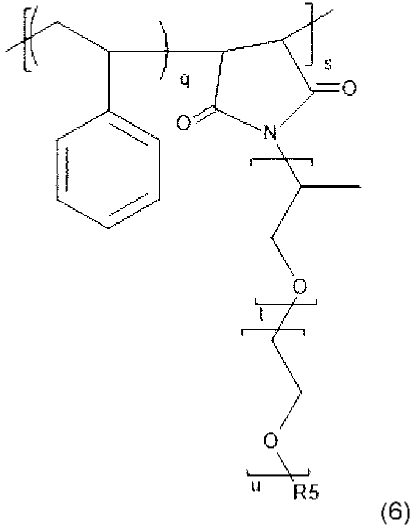 dans laquelle
q est un nombre entier de 1 à 4, de manière particulièrement préférée un nombre entier de 1 à 2
s est un nombre entier de 5 à 50, de manière particulièrement préférée un nombre entier de 5 à 20,
R5 représente H ou un groupe alkyle ayant de 1 à 4 atomes de carbone, de manière particulièrement préférée méthyle,
t est un nombre entier de 0 à 10, de manière particulièrement préférée un nombre entier de 1 à 4,
u est un nombre entier de 1 à 100, de manière particulièrement préférée un nombre entier de 10 à 50, et
t + u est supérieur à 10.

16. Préparation de pigment selon une ou plusieurs des revendications 1 à 15, dans laquelle 5 à 80 % en poids du composant (A) sont contenus.

17. Préparation de pigment selon une ou plusieurs des revendications 1 à 16, dans laquelle 1 à 20 % en poids du composant (B) sont contenus.

18. Préparation de pigment selon une ou plusieurs des revendications 1 à 17, dans laquelle 1 à 20 % en poids du composant (C) sont contenus.

19. Utilisation d'une combinaison de polymères (B) et (C) en tant que dispersant, dans laquelle
(B) est un copolymère anionique, qui contient
(I) 40 à 95 % en moles d'unités structurales d'un monomère anionique
qui est choisi dans le groupe constitué par l'acide acrylique, l'acide méthacrylique, l'acide itaconique, l'acide 2-carboxyéthylacrylique, l'acide maléique, leurs mélanges et leurs sels respectifs, de préférence l'acide méthacrylique ou son sel, et
(II) 5 à 60 % en moles d'unités structurales d'un monomère ayant des unités de répétition selon la formule (B1) 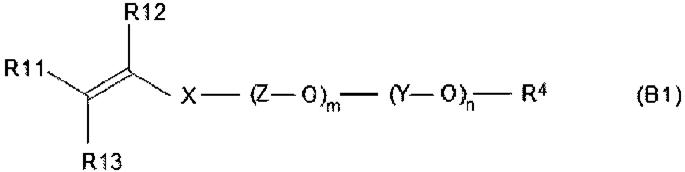 dans laquelle
R11, R12, R13 sont choisis indépendamment les uns des autres dans le groupe constitué par H, méthyle, éthyle,
R4 représente H ou un groupe alkyle ayant de 1 à 4 atomes de carbone,
X est choisi dans le groupe constitué par O, COO, CONH, CH₂O ou CH₂CH₂O,
Y représente un groupe éthylène
Z représente un groupe propylène, un groupe butylène ou un groupe phényléthylène,
m est un nombre entier de 0 à 100,
n est un nombre entier de 1 à 100, et
m + n est supérieur à 5, et
(C) est un copolymère non ionique, qui contient au moins une unité structurale ayant des groupes aromatiques et au moins une unité structurale ayant des groupes polyéthylène glycol,
dans la fabrication d'une préparation de pigment, contenant
(A) au moins un pigment organique et/ou inorganique et/ou une charge, et
(H) de l'eau.
